# EUROPEAN PATENT APPLICATION

(11) **EP 0 922 682 A1**
(43) Date of publication of application: **16.06.1999**
(21) Application number: 97830662.9
(22) Date of filing: 12.12.1997
(51) Int. Cl.: C04B 37/02

(54) **Method of forming a joint between a ceramic substrate and a metal component**

(71) Applicant: FINMECCANICA S.p.A. AZIENDA ANSALDO, 16128 Genova (IT)
(72) Inventor: Guerreschi, Umberto, 16128 Genova (IT)
(74) Representative: Cerbaro, Elena

(57) **Abstract**

A method of forming a joint between a ceramic substrate and a metal component, particularly joints resistant to high temperatures (over 1200°C), and which provides for depositing on the ceramic substrate, e.g. by physical vapour spraying, auxiliary metal layers of materials selected to ensure firm adhesion to the ceramic, and for subsequently soldering the coated ceramic substrate and an intermediate metal layer of platinum or other metal having a thermal expansion coefficient comparable with that of the ceramic; which soldering is performed using a filler material capable of combining, in the molten state, with the materials of the auxiliary layers and with the metal component, to form a multicomponent metal alloy with a melting temperature of over roughly 1200°C. A further soldering step using commercial solders may be performed to ensure firm adhesion to a base metal other than that of the intermediate layer.

## Description

The present invention relates to a method of forming a joint between a ceramic substrate and a metal component, and which is particularly suitable for forming ceramic-metal joints in components used at high temperatures and in critical environments.

Numerous technical applications, including the manufacture of gas turbine components, and especially the manufacture of components used at high temperatures and in chemically aggressive environments, involve forming joints between ceramic substrates and metal components.

Various methods of forming a joint between a ceramic substrate and a metal component are known. The one most commonly used for high-temperature-duty components is vacuum-furnace soldering, whereby the parts to be joined are treated in a vacuum furnace with, in between, an appropriate filler material, typically a metal alloy, which melts at a predetermined temperature to solder the base materials.

Active solders, i.e. containing elements combining chemically with the ceramic matrix, may also be used to improve adhesion to the ceramic matrix. Though numerous, even active, solders are available commercially, none is suitable for applications over 1000°C, by all melting at a lower temperature (e.g. typical solders for this type of application are AgCuTi and TiCuNi alloys, which melt at around 870°C and 970°C respectively). On the other hand, known high-melt solders, such as alloys mainly formed of Ni, Cr, Si, Cu, Ti, Zr, have no commercial application and would therefore be extremely expensive to use on an industrial scale.

Ceramic-metal joints are also known to be formed by metallizing, i.e. depositing an auxiliary metal film on, the ceramic surface, which, depending on the material used, may be done using various methods, including physical or chemical vapour deposition (PVD or CVD). If, as is commonly the case, moly-manganese is used, this may easily be applied even in the form of paint. Once deposited, the auxiliary metal film is appropriately heat treated to secure it to the ceramic, after which, a commercial filler, such as copper-silver (eutectic alloy which melts at 780°C), may be used, again by heat treating in a vacuum furnace, to solder the whole to the final metal component. In this case too, however, the maximum duty temperature of the finished component must obviously be below the melting point of the solder, so that the problem still remains of forming ceramic-metal joints capable of withstanding temperatures of 1000°C and over.

When forming ceramic-metal joints, besides the problem of selecting the right filler and the consequent limitation posed on the maximum duty temperature, also to be taken into account is the difference in the thermal expansion coefficients of the two base materials to be joined, which also increases as a function of soldering temperature. In other words, the problem also exists of minimizing internal stress caused by the difference in the thermal expansion coefficients of the materials being joined, and which is generated both during the joining process (normally conducted at fairly high temperature) and in actual use.

To reduce stress generated by the joining process, appropriate intermediate layers (known as interlayers) are applied between the ceramic and metal using various methods. The materials currently used for this purpose, however, fail to provide for joints capable of withstanding high temperatures.

It is an object of the present invention to overcome the aforementioned drawbacks of known methods of forming ceramic-metal joints. In particular, it is an object of the present invention to provide a method of forming a joint between a ceramic substrate and a metal component, which is cheap and easy to implement, may be implemented using readily available low-cost commercial products, and provides for forming ceramic-metal joints capable of withstanding relatively high temperatures, in particular of over 1200°C.

According to the present invention, there is provided a method of forming a joint between a ceramic substrate and a metal component, and which is particularly suitable for forming high-temperature-resistant joints; the method being characterized by comprising, in combination:
- a metallizing step to metallize said ceramic substrate, and wherein at least a first auxiliary metal layer of predetermined thickness is deposited on a surface of said ceramic substrate, so that said surface is uniformly coated with said auxiliary metal layer; said at least a first auxiliary metal layer being formed of a first metal material capable of combining chemically with and effectively adhering to said ceramic substrate;
- at least a first soldering step to solder said ceramic substrate and an intermediate metal layer of a second metal material, and wherein a first filler material is interposed between said coated surface of the ceramic substrate and said intermediate metal layer, and is subsequently brought to a predetermined melting temperature; said first filler material being capable of combining, in the molten state, with both said first metal material and said second metal material, to form a multicomponent metal alloy having a melting temperature of over roughly 1200°C;
   said second metal material having a thermal expansion coefficient comparable with the thermal expansion coefficient of said ceramic substrate; and the difference between the thermal expansion coefficient of said second metal material and the thermal expansion coefficient of said ceramic substrate being less than 10 x 10⁻⁶°C⁻¹.

According to a preferred embodiment, two auxiliary metal layers of respective predetermined thicknesses are deposited successively on said surface of the ceramic substrate during said metallizing step; a first of said auxiliary metal layers, adjacent to said surface of the ceramic substrate, being formed of said first metal material capable of combining chemically with said ceramic substrate; and a second of said auxiliary metal layers being formed of a third metal material capable of combining physically with said first metal material to form a eutectic of predetermined composition at a predetermined temperature.

More specifically, said first auxiliary metal layer is formed of titanium (Ti) and of 2 to 6 µm in thickness; said second auxiliary metal layer being formed of nickel (Ni) and of 1 to 2 µm in thickness; and said auxiliary metal layers being deposited on said surface of the ceramic substrate by physical vapour spraying at a temperature below 200°C.

Said first filler material with which said first soldering step is performed is preferably a nickel-based commercial solder containing predetermined percentages of chromium and silicon; said solder having a melting temperature of about 1000°C to 1200°C, and being capable of combining, in the molten state, with said auxiliary metal layers to form a multicomponent alloy comprising Ti, Ni, Cr, Si and having a melting temperature of over roughly 1250°C; said first soldering step being performed in a vacuum furnace or in an inert-gas atmosphere at a soldering temperature of about 1200°C. More specifically, said commercial solder has the characteristics shown in Table 1.

In the event said intermediate layer of said second metal material comprises a surface portion of said metal component to be joined to said surface of the ceramic substrate, said at least a first soldering step is followed by continuous, progressive, controlled cooling of said ceramic substrate joined to said metal component, conducted in such a manner as to limit the formation of thermal stress at said joint.

Conversely, in the event said metal component is of a material other than said second metal material and having a thermal expansion coefficient differing considerably from the thermal expansion coefficient of said ceramic substrate, the method comprises, after said at least a first soldering step to solder said ceramic substrate and said intermediate metal layer, at least a second soldering step to solder said intermediate metal layer and said metal component, and wherein a second filler material is interposed between said intermediate metal layer and a surface portion of said metal component, and is subsequently brought to a predetermined melting temperature of below roughly 1000°C.

In this case, the thermal expansion coefficient of said second metal material of said intermediate metal layer is of an intermediate value between the thermal expansion coefficient of said ceramic substrate and the thermal expansion coefficient of said metal component.

Whichever the case, according to a preferred embodiment, said second metal material of said intermediate metal layer is platinum or niobium; and, according to a possible variation, said intermediate metal layer comprises a stainless steel mesh.

In the event the composition of said ceramic substrate is substantially alumina-based (aluminium oxide, Al₂O₃), said first auxiliary metal layer is deposited directly on said surface of said ceramic substrate. Conversely, in the event the composition of said ceramic substrate is not substantially alumina-based, the method comprises a preliminary step of depositing a layer of alumina of predetermined thickness on said surface of the ceramic substrate, said deposition being performed by plasma-jet spraying.

The method according to the invention provides for forming, between a ceramic substrate and a metal component, a joint capable of resisting relatively high temperatures - higher than those withstandable by joints formed using currently known methods - and in particular capable of resisting temperatures of over 1200°C. The method according to the invention also provides for greatly reducing residual thermal stress generated in the joined components by heat treatment and due to the difference in the thermal expansion coefficients of the mating materials, thus improving the end quality and working life of the components. Moreover, the method is cheap and easy to implement industrially, by comprising operating steps that are easy to perform and control, and by permitting complete control of each parameter.

In short, the method according to the invention employs a combination and appropriate succession of various techniques, known in different technical fields, to solve the aforementioned problems encountered in the formation of ceramic-metal joints, and which, in particular, prevent the formation of joints of this type capable of resisting relatively high temperatures of over 1200°C. Applying known techniques to solve such problems has involved not only determining the most suitable operating parameters by which to conduct each step in the method, but also selecting the specific materials to use in each step to achieve the desired technical effect.

The metal materials required for the auxiliary layers deposited on the ceramic substrate, and the filler materials required to solder the ceramic to the final metal component to form a joint capable of resisting temperatures of over 1200°C have therefore been determined.

Particularly significant are the metal materials selected for the auxiliary layers deposited on the ceramic surface; which choice in fact, in addition to the filler materials selected for the subsequent soldering steps, is what determines the possibility or not of effectively joining the base component and obtaining a joint that is also capable of resisting high temperatures.

More specifically, titanium combines chemically with alumina to form thin layers of titanium oxide, and also forms a eutectic with nickel which melts at about 960°C with a 70% Ti and 30% Ni composition, so that not only is good adhesion achieved between the titanium layer and the ceramic, but also the possibility of subsequently forming the high-melt multicomponent alloy defining the actual joint.

The thickness of the auxiliary metal layers is also important for obtaining a strong, efficient joint. Extensive testing has determined the thicknesses giving the best results, and the relative spray process parameters for ensuring such thicknesses. The best results were obtained with 2 to 6 µm thick titanium layers and 1 to 3 µm thick nickel layers.

Obviously, the method according to the invention may be applied to any type of ceramic substrate. The auxiliary titanium layer adheres best to a ceramic composition with a composite or monolithic alumina base (e.g. reinforced with silicon carbide), in which case, adhesion is ensured by the formation of titanium oxide. Other ceramic substrates, however, may be deposited beforehand with a surface layer of alumina to obtain the preferred conditions, by plasma-jet spraying, for example, a predetermined quantity of alumina on the ceramic substrate itself.

Similarly, the method according to the invention applies to metal components of different materials. In the event the metal component to be joined to the ceramic has a thermal expansion coefficient comparable with that of the ceramic substrate, the method is completed by joining the ceramic substrate, complete with the auxiliary metal layers, to the final component.

Such is the case, for example, of joints between an alumina substrate and a platinum component : the linear thermal expansion coefficients of alumina and platinum at 900°C being respectively 8.1 x 10⁻⁶ °C⁻¹ and 8.8 x 10⁻⁶ °C⁻¹. The platinum, which, in this case, is the final metal element to be joined to the alumina, therefore has a linear thermal expansion coefficient higher than but substantially comparable with that of alumina, i.e. of the same order of magnitude, the difference between the two coefficients being less than 10 x 10⁻⁶ °C⁻¹.

Conversely, if the metal component to be joined to the ceramic is made of a material with a thermal expansion coefficient differing considerably from and higher than that of ceramic, as in the case of commonly used superalloys for gas turbine components, the method comprises the use of an intermediate layer, e.g. of platinum itself, to reduce the thermal stress induced by the different thermal expansion coefficients of the base materials. In which case, a further soldering cycle is necessary to compensate for the different thermal expansion coefficients of alumina and the metal alloy to be joined to it.

At any rate, the method according to the invention includes a soldering step between the ceramic substrate, complete with the auxiliary metal layers (e.g. titanium and nickel), and a metal material with a thermal expansion coefficient comparable with that of the ceramic, e.g. platinum.

The choice of the filler with which to perform the above soldering operation is also essential for ensuring the effectiveness of the final joint : excellent results have been obtained using a nickel-based commercial solder with the characteristics shown in Table 1. This is a commercial product marketed in various forms, the easiest to apply being in strip form.

**TABLE 1**

| trade name | NICROBRAZ 30 |
|---|---|
| nominal composition (percentages by weight) | Cr 19 |
| | Si 10.2 |
| | C 0.06 max |
| | Ni remainder |
| melting temperature | 1135°C |
| soldering temperature | 1150÷1205°C |
| recommended soldering temperature | 1190°C |
| oxidation resistance | 1205°C |

Soldering is performed in a furnace large enough to treat the work, and in which a high-vacuum (about 10⁻⁴ torr) or inert-gas controlled atmosphere is maintained throughout heat treatment to prevent oxidizing the work.

In the case of metal components made of material with a thermal expansion coefficient differing considerably from that of the ceramic, the soldering step described above serves to deposit an intermediate layer of platinum (or other metal material with a similar thermal expansion coefficient) on the ceramic surface. A second soldering cycle is then performed to join the intermediate platinum layer - secured to the ceramic substrate by the auxiliary metal layers - and the base component.

This further soldering step may be performed using any of a large number of commercial solders ensuring firm bonding of the two metals, e.g. a nickel- or copper/silver-based alloy (with a soldering temperature of 780°C to 1000°C), and is also performed in a vacuum furnace.

Besides platinum as described, the intermediate layer may also be formed using other metal materials, such as niobium or a stainless steel mesh; and a number of intermediate layers may be used of the same of different materials, with intermediate thermal expansion coefficients increasing gradually between those of the ceramic and base component.

For more complete disclosure, a number of non-limiting embodiments of the present invention will now be described purely by way of example.

### EXAMPLE 1

A ceramic substrate of monolithic alumina (aluminium oxide Al₂O₃) was joined to a metal component of platinum (Pt): more specifically, respective substantially flat surfaces were joined.

As stated, alumina and platinum have respective linear thermal expansion coefficients (at 900°C) of 8.1 x 10⁻⁶ °C⁻¹ and 8,8 x 10⁻⁶ °C⁻¹: the platinum, which, in this case, is the final metal element to be joined to the alumina, therefore has a linear thermal expansion coefficient greater than but substantially comparable with that of alumina, i.e. of the same order of magnitude, the difference between the two coefficients being less than 10 x 10⁻⁶ °C⁻¹.

A first roughly 4 µm thick layer of titanium and a second roughly 1.6 µm thick layer of nickel were first deposited by physical vapour deposition.

The platinum metal component was then soldered to the ceramic surface coated with the two titanium and nickel layers, using a commercial nickel-based filler (solder) with the characteristics shown in Table 1.

Soldering was performed in a vacuum furnace large enough to house the work, and in which the temperature was gradually brought to 1180°C to melt both the filler and the auxiliary titanium and nickel layers.

More specifically, as the temperature rose, the titanium contacting the alumina combined with oxygen to form titanium oxide and so ensure a firm bond with the ceramic; when the temperature reached roughly 960°C, molten titanium and nickel combined to form a eutectic of 70% Ti, 30% Ni; and, at roughly 1135°C, the solder began melting and also combined with the molten titanium and nickel to form a quaternary alloy of Ti, Ni, Cr, Si, as shown by electron microscope microphotographic analysis.

The resulting alloy, which defines the joint between the ceramic (alumina) and metal (platinum), was roughly 0.1 mm thick and, when tested, showed a melting point of over 1250°C.

The process was then completed by controlled cooling to prevent a sharp fall in temperature between the ceramic and metal.

The joint showed no severe residual stress, due to the similar thermal expansion coefficients of the base materials, alumina and Pt.

### EXAMPLE 2

A joint was formed between a composite ceramic substrate and a metal component made of a superalloy known as Nimonic PK33 commonly used in high-temperature applications and having a linear thermal expansion coefficient (at 900°C) of roughly 18 x 10⁻⁶ °C⁻¹. In this case too, the joined surfaces were substantially flat.

Before forming the ceramic-metal joint, an alumina layer was plasma-jet sprayed on to the composite ceramic substrate to improve adhesion of the auxiliary metal layer of titanium to the substrate.

In the same way as for Example 1, the auxiliary titanium and nickel layers were then deposited, and the first soldering step between the ceramic substrate so coated and an intermediate platinum layer was performed. In this case, the platinum layer formed an "interlayer" proper between the ceramic and the metal to be joined to it. The intermediate platinum layer, however, was soldered to the ceramic is exactly the same way as for Example 1.

Finally, a second soldering cycle, again in a vacuum furnace, was performed to form the joint between the intermediate platinum layer and the base alloy, using a commercial nickel-based solder with a soldering temperature of roughly 800°C.

## Claims

1. A method of forming a joint between a ceramic substrate and a metal component, and which is particularly suitable for forming high-temperature-resistant joints; the method being characterized by comprising, in combination:
- a metallizing step to metallize said ceramic substrate, and wherein at least a first auxiliary metal layer of predetermined thickness is deposited on a surface of said ceramic substrate, so that said surface is uniformly coated with said auxiliary metal layer; said at least a first auxiliary metal layer being formed of a first metal material capable of combining chemically with and effectively adhering to said ceramic substrate;
- at least a first soldering step to solder said ceramic substrate and an intermediate metal layer of a second metal material, and wherein a first filler material is interposed between said coated surface of the ceramic substrate and said intermediate metal layer, and is subsequently brought to a predetermined melting temperature; said first filler material being capable of combining, in the molten state, with both said first metal material and said second metal material, to form a multicomponent metal alloy having a melting temperature of over roughly 1200°C;
said second metal material having a thermal expansion coefficient comparable with the thermal expansion coefficient of said ceramic substrate; and the difference between the thermal expansion coefficient of said second metal material and the thermal expansion coefficient of said ceramic substrate being less than 10 x 10⁻⁶ °C⁻¹.

2. A method as claimed in Claim 1, characterized in that two auxiliary metal layers of respective predetermined thicknesses are deposited successively on said surface of the ceramic substrate during said metallizing step; a first of said auxiliary metal layers, adjacent to said surface of the ceramic substrate, being formed of said first metal material capable of combining chemically with said ceramic substrate; and a second of said auxiliary metal layers being formed of a third metal material capable of combining physically with said first metal material to form a eutectic of predetermined composition at a predetermined temperature.

3. A method as claimed in Claim 2, characterized in that said first auxiliary metal layer is formed of titanium (Ti) and of 2 to 6 µm in thickness; said second auxiliary metal layer being formed of nickel (Ni) and of 1 to 2 µm in thickness; and said auxiliary metal layers being deposited on said surface of the ceramic substrate by physical vapour spraying at a temperature below 200°C.

4. A method as claimed in Claim 3, characterized in that said first filler material with which said first soldering step is performed is a nickel-based commercial solder containing predetermined percentages of chromium and silicon; said solder having a melting temperature of about 1000°C to 1200°C, and being capable of combining, in the molten state, with said auxiliary metal layers to form a multicomponent alloy comprising Ti, Ni, Cr, Si and having a melting temperature of over roughly 1250°C; said first soldering step being performed in a vacuum furnace or in an inert-gas atmosphere at a soldering temperature of about 1200°C.

5. A method as claimed in the foregoing Claim, characterized in that said commercial solder has the characteristics shown in Table 1.

6. A method as claimed in one of the foregoing Claims, characterized in that said intermediate layer of said second metal material comprises a surface portion of said metal component to be joined to said surface of the ceramic substrate; and in that said at least a first soldering step is followed by continuous, progressive, controlled cooling of said ceramic substrate joined to said metal component, conducted in such a manner as to limit the formation of thermal stress at said joint.

7. A method as claimed in one of the foregoing Claims from 1 to 5, characterized in that said metal component is of a material other than said second metal material and having a thermal expansion coefficient differing considerably from the thermal expansion coefficient of said ceramic substrate; the method comprising, after said at least a first soldering step to solder said ceramic substrate and said intermediate metal layer, at least a second soldering step to solder said intermediate metal layer and said metal component, and wherein a second filler material is interposed between said intermediate metal layer and a surface portion of said metal component, and is subsequently brought to a predetermined melting temperature of below roughly 1000°C.

8. A method as claimed in the foregoing Claim, characterized in that the thermal expansion coefficient of said second metal material of said intermediate metal layer is of an intermediate value between the thermal expansion coefficient of said ceramic substrate and the thermal expansion coefficient of said metal component.

9. A method as claimed in the foregoing Claim, characterized in that said second metal material of said intermediate metal layer is platinum or niobium.

10. A method as claimed in one of the foregoing Claims from 6 to 8, characterized in that said intermediate metal layer comprises a stainless steel mesh.

11. A method as claimed in one of the foregoing Claims, characterized in that, in the event the composition of said ceramic substrate is substantially alumina-based (aluminium oxide, Al₂O₃), said first auxiliary metal layer is deposited directly on said surface of said ceramic substrate; in the event the composition of said ceramic substrate is not substantially alumina-based, the method comprising a preliminary step of depositing a layer of alumina of predetermined thickness on said surface of the ceramic substrate; said deposition being performed by plasma-jet spraying.
